# EUROPÄISCHE PATENTSCHRIFT

(11) **EP 2 769 273 B1**
(45) Veröffentlichungstag und Bekanntmachung des Hinweises auf die Patenterteilung: **17.08.2016**
(21) Anmeldenummer: 12813779.1
(22) Anmeldetag: 11.12.2012
(51) Int. Cl.: G05B 9/02, H01H 47/00

(54) **ERWEITERUNGSMODUL FÜR EIN SICHERHEITSSYSTEM**
EXPANSION MODULE FOR A SECURITY SYSTEM
MODULE D'EXTENSION POUR UN SYSTÈME DE SÉCURITÉ

(30) Priorität: 14.12.2011 DE 102011088521
(43) Veröffentlichungstag der Anmeldung: 27.08.2014
(73) Patentinhaber: Siemens Aktiengesellschaft, 80333 München (DE)
(72) Erfinder: AUFSCHNEIDER, Klaus, 92278 Illschwang (DE); HALLER, Herbert, 92260 Fichtenhof (DE); KNEIDL, Andreas, 92729 Weiherhammer (DE); LEE-HOFF, Kyoung-Jin, 92224 Amberg (DE)
(86) Internationale Anmeldenummer: PCT/EP2012/075081
(87) Internationale Veröffentlichungsnummer: WO 2013/087622

(56) Entgegenhaltungen:
- EP-A1- 2 045 683
- WO-A1-01/53742
- WO-A2-02/071600

## Beschreibung

Die Erfindung betrifft Erweiterungsmodule für ein modulares Sicherheitssystem im Bereich der industriellen Automatisierungstechnik.

Ein derartiges Sicherheitssystem umfasst als Zentraleinheit ein Basismodul, welches Eingänge des Sicherheitssystems einliest und Ausgänge des Sicherheitssystems ansteuern kann. Die logische Verschaltung der Eingänge mit den Ausgängen des Sicherheitssystems erfolgt über das Basismodul. Üblicherweise umfasst ein Basismodul selbst eine bestimmte Anzahl von Eingängen und Ausgängen. Werden für das Sicherheitssystem jedoch mehr Ausgänge benötigt, als sie durch das Basismodul selbst bereitgestellt werden, so kann das Sicherheitssystem mit entsprechenden Erweiterungsmodulen mit Ausgängen erweitert werden. Hierfür wird das Basismodul mit einem Erweiterungsmodul, welches selbst Ausgänge umfasst, elektrisch leitend verbunden. Werden wiederum mehr Ausgänge benötigt, als sie durch das Basismodul und dem bereits gekoppelten Erweiterungsmodul bereitgestellt werden, so kann vorzugsweise das Sicherheitssystem um ein weiteres Erweiterungsmodul mit Ausgängen erweitert werden. Hierfür wird das bereits gekoppelte Erweiterungsmodul mit einem weiteren Erweiterungsmodul, welches selbst Ausgänge umfasst, elektrisch leitend verbunden. Die Ansteuerung der einzelnen Ausgänge erfolgt hierbei vorzugsweise zentral und einheitlich vom Basismodul.

An die Eingänge eines derartigen Sicherheitssystems werden üblicherweise Sensoren, insbesondere Befehls- und Meldegeräte (z.B. Positionsschalter, Sicherheitslichtschranken), angeschlossen, so dass mittels der Sensoren Signale an das Basismodul ausgegeben werden können. Das Basismodul liest die an den Eingängen anliegenden Signale sicher ein und steuert, vorzugsweise mittels ihrer Verarbeitungseinheit, die entsprechenden Ausgänge des Sicherheitssystems sicher an. Über die Ausgänge eines Sicherheitssystems werden insbesondere Verbraucher, Ventile oder Schaltgeräte sicher angesteuert.

Da es sich bei dem Sicherheitssystem um ein sicherheitsgerichtetes System handelt, werden spezielle Anforderungen an das Sicherheitssystem gestellt. Hierbei müssen spezielle im Bereich der industriellen Automatisierungstechnik geltenden Sicherheitsvorschriften erfüllt werden.

Ein Ausgang des Sicherheitssystems ist hierfür beispielsweise jeweils mit zwei intern verbauten in Serie geschalteten Schaltelementen gekoppelt, so dass nur durch eine einheitliche Zustandsänderung der Schaltelemente ein Signal am Ausgang ausgegeben werden kann. Die beiden Schaltelemente können zwei Zustände (Geschlossen/Offen) einnehmen, so dass über den Ausgang zwei Signale ausgebbar sind (High Signal/Low Signal). Dadurch, dass die beiden Schaltelemente in Serie geschaltet sind, kann vermieden werden, dass sofern beide Schaltelemente geschlossen sind (über den Ausgang wird ein High Signal ausgegeben) und einer der beiden Schaltelemente ist verschweißt, dennoch ein Abschalten (Ausgabe eines Low Signals) erfolgen kann, da durch das funktionsfähige Schaltelement ein Abschalten erfolgt.

Liegt ein Sicherheitssystem mit einem Basismodul und einem Erweiterungsmodul vor, so erfolgt üblicherweise eine Ansteuerung der Schaltelemente des Ausgangs des Erweiterungsmoduls durch das Basismodul. Da es sich um ein sicherheitsgerichtetes System handelt werden mittels eines Schaltsignals des Basismoduls je Ausgang des Erweiterungsmoduls zwei Schaltelemente des Ausgangs gleichzeitig angesteuert. Vor dem Ausgeben des Schaltsignals an den Ausgang erfolgt jedoch durch das Basisgerät zunächst eine Überwachung der vorliegenden Schaltstellung der anzusteuernden Schaltelemente des Ausgangs. Hierbei wird kontrolliert ob die vorliegende Schaltstellung der anzusteuernden Schaltelemente der erwarteten ordnungsgemäßen Schaltstellung entspricht oder nicht. Liegt eine ordnungsgemäße Schaltstellung an den anzusteuernden Schaltelementen vor, so wird das Schaltsignal von dem Basismodul ausgegeben und die beiden Schaltelemente des anzusteuernden Ausgangs werden geschaltet, so dass am Ausgang des Erweiterungsmoduls ein High Signal erzeugt wird. Wird hingegen festgestellt, dass keine erwartete ordnungsgemäße Schaltstellung vorliegt, so unterbleibt die Ansteuerung der Schaltgeräte des anzusteuernden Ausgangs, so dass am Ausgang das Low Signal beibehalten wird.

Vor einem Umsetzen des Freigabekreises (Ausgeben des High Signals am Ausgang durch Ausgeben des Schaltsignals an die Schaltelemente des Ausgangs) wird somit durch das Basismodul zunächst der Rückführkreis zentral ausgewertet (Kontrolle ob die anzusteuernden Schaltelemente des Ausgangs die erwartete ordnungsgemäße Schaltstellung aufweisen). Erst wenn durch das Basisgerät der erwartete ordnungsgemäße Schaltzustand der anzusteuernden Schaltelemente festgestellt wird, wird das Schaltsignal zur Ansteuerung der Schaltelemente ausgegeben. Sollen mehrere Ausgänge des Sicherheitssystems gleichzeitig angesteuert werden, so wird üblicherweise der Rückführkreis der Schaltelemente der anzusteuernden Ausgänge in Serie geschaltet und zentral durch das Basisgerät ausgewertet. Weisen alle Schaltelemente der anzusteuernden Ausgänge die erwartete ordnungsgemäße Schaltstellung auf, so wird das Schaltsignal durch das Basisgerät ausgegeben. Weist eines der Schaltelemente der anzusteuernden Ausgänge keine erwartete ordnungsgemäße Schaltstellung auf, so wird das Schaltsignal durch das Basisgerät unterbunden.

Aus der WO 02/071600 A2 ist eine Kaskadierung von Sicherheitskombinationen bekannt. Hierbei werden gleiche Sicherheitsschaltvorrichtungen miteinander verschaltet, so dass über einen Sensor in Abhängigkeit der zugehörigen Sicherheitsschaltvorrichtungen die hierüber angebundenen Verbraucher abgeschaltet werden können. Mittels der Sicherheitsschaltvorrichtungen wird jeweils die Stromversorgung zu dem zugehörigen Verbraucher geschaltet. Der Vorteil besteht darin, dass bei Betätigung des Sensors der nachgeschalteten Sicherheitsschaltvorrichtungen lediglich dessen Verbraucher abgeschaltet wird. Wird hingegen der Sensor der übergeordneten Sicherheitsschaltvorrichtungen betätigt, so wird das gesamte nachgeschaltete System abgeschaltet.

Aus der EP 2 045 683 A1 ist eine Schaltungsanordnung zur Überwachung von redundant in Reihe angeordneter Relais zum sicheren Schalten einer Last an einen Motor bekannt. Hierzu wird in einer Ausgestaltung ein gemeinsamer Rückführkreis eingesetzt. Mit der Schaltung kann das funktionsgerechte Steuerverhalten von Relais vor dem Schalten überprüft werden.

WO 01/53742 A1 offenbart eine Schutzvorrichtung gegen unerwünschte Inbetriebnahme einer Maschinenanlage, die einen zentralen Leistungsschalter, einen zentralen Steuerteil und mindestens ein dezentrales Bedienelement aufweist. Der zentrale Leistungsschalter ist in einer Leistungseinheit angeordnet, die mit einer dreiphasigen Stromversorgung verbunden ist. Der zentrale Leistungsschalter ist mit zwei in Serie geschalteten Gruppen von Arbeitskontakten versehen, die jeweils eine Phase unterbrechen. Jede Gruppe von Arbeitskontakten ist mit je einem Hilfskontakt verbunden, die einem Rückführkreis zugeordnet sind. Die Ansteuerung der Gruppen von Arbeitskontakten mit je einem Hilfskontakt erfolgt separat, so dass eine zweikanalige Abschaltung verwirklicht wird.

Es ist Aufgabe der vorliegenden Erfindung ein verbessertes Erweiterungsmodul für ein eingangs beschriebenes Sicherheitssystem bereitzustellen.

Diese Aufgabe wird gelöst durch eine Vorrichtung gemäß Anspruch 1.

Vorteilhafte Weiterbildungen der Erfindung sind in den abhängigen Ansprüchen 2 bis 11 angegeben.

Der mit der Erfindung erzielte Vorteil besteht insbesondere darin, dass das Erweiterungsmodul eigenständig eine Auswertung des Rückführkreises durchführt und keine zentrale Auswertung des Rückführkreises durch das Basismodul erfolgen muss. Innerhalb eines Sicherheitssystems kann folglich ein Basismodul mit einem Erweiterungsmodul gekoppelt werden. Hierbei wird eine elektrisch leitende Verbindung zwischen der ersten und zweiten Kontaktstelle hergestellt. Das Basismodul kann über diese elektrisch leitende Verbindung an das Erweiterungsmodul ein Schaltsignal zum Schließen des ersten und zweiten Schaltelements des Erweiterungsmoduls ausgeben. Durch das Schließen des ersten und zweiten Schaltelements des Erweiterungsmoduls wird über das erste und zweite Schaltelement ein "High" Signal zum Ausgang des Erweiterungsmoduls geführt. Durch das Schließen der beiden Schaltelemente kommt es somit zu einem Zustandswechsel am Ausgang des Erweiterungsmoduls (von Low auf High).

Im Gegensatz zu den bisherigen Lösungen, muss durch das Basismodul vor dem Ausgeben des Schaltsignals zum Schließen des ersten und zweiten Schaltelements an das Erweiterungsmodul keine Auswertung des Rückführkreises erfolgen, da die sichere Auswertung des Rückführkreises dezentral im Erweiterungsmodul selbst erfolgt. Das Basismodul kann folglich das Schaltsignal an das Erweiterungsmodul senden. Das Erweiterungsmodul stellt daraufhin eingeständig fest, ob die durch das Schaltsignal zu schließenden Schaltelemente einen erwarteten ordnungsgemäßen Zustand aufweisen oder nicht. Eine erwartete ordnungsgemäße Schaltstellung liegt vor, wenn vor dem Umsetzen des Schaltsignals das anzusteuernde erste und zweite Schaltelement geöffnet ist. Ist das erste und/oder zweite Schaltelement geschlossen, so liegt kein erwarteter ordnungsgemäßer Zustand vor. Die vorliegende Schaltstellung des ersten Schaltelements wird mittels des ersten Meldemittels, welches vorzugsweise ein zwangsgeführter Öffner des ersten Schaltelements ist, ermittelt. Die vorliegende Schaltstellung des zweiten Schaltelements wird mittels des zweiten Meldemittels, welches vorzugsweise ein zwangsgeführter Öffner des zweiten Schaltelements ist, ermittelt. Das Erweiterungsmodul kann somit durch eine Auswertung des ersten und zweiten Meldemittels feststellen, ob eine erwartete ordnungsgemäße Schaltstellung vorliegt oder nicht.

Erfindungsgemäß umfasst das Erweiterungsmodul eine Verarbeitungseinheit, welche mittels des ersten und zweiten Meldemittels die vorliegende Schaltstellung des ersten und zweiten Schaltelements erfassen kann, ein vom Basismodul gesandtes Schaltsignal zum Schließen des ersten und zweiten Schaltelements über die zweite Kontaktstelle empfangen kann und ein Schaltsignal zum Schließen des ersten und zweiten Schaltelements an das erste und zweite Schaltelement ausgeben kann. Die Verarbeitungseinheit ist vorzugsweise ein Mikrocontroller oder ein FPGA-Schaltkreis.

In einer bevorzugten Ausführungsform der Erfindung ist die Verarbeitungseinheit derart ausgebildet, dass sie ein Schaltsignal zum Schließen des ersten und zweiten Schaltelements nur bei Vorliegen einer erwarteten ordnungsgemäßen Schaltstellung des ersten und zweiten Schaltelements an das erste und zweite Schaltelement ausgibt. Die Verarbeitungseinheit kann folglich ein Schaltsignal zum Schließen des ersten und zweiten Schaltelements vom Basismodul empfangen. Sie gibt jedoch nur ein Schaltsignal zum Schließen des ersten und zweiten Schaltelements an den Steueranschluss des ersten und zweiten Schaltelements aus, sofern eine erwartete ordnungsgemäße Schaltstellung der ersten und zweiten Schaltelemente über die zugehörigen Meldemittel durch die Verarbeitungseinheit festgestellt wird.

In einer weiteren vorteilhaften Ausführungsform der Erfindung ist das erste Meldemittel zwischen der zweiten Kontaktstelle und einem Steueranschluss des ersten Schaltelements geschaltet und das zweite Meldemittel ist zwischen der zweiten Kontaktstelle und einem Steueranschluss des zweiten Schaltelements geschaltet. Mittels eines Signals am Steueranschluss wird das zugehörige Schaltelement gesteuert.

Ein empfangenes Schaltsignal zum Schließen des ersten und zweiten Schaltelements wird somit über das erste und zweite Meldemittel geführt. Bei Vorliegen einer fehlerhaften Schaltstellung des ersten Schaltelements unterbricht das erste Meldemittel die Verbindung zwischen der zweiten Kontaktstelle und dem Steueranschluss des ersten Schaltelements. Bei Vorliegen einer fehlerhaften Schaltstellung des zweiten Schaltelements unterbricht das zweite Meldemittel die Verbindung zwischen der zweiten Kontaktstelle und dem Steueranschluss des zweiten Schaltelements.

Eine fehlerhafte Schaltstellung des ersten Schaltelements liegt vor, wenn vor dem Umsetzen des Schaltsignals zum Schließen des ersten und zweiten Schaltelements das erste Schaltelement geschlossen ist. Eine fehlerhafte Schaltstellung des zweiten Schaltelements liegt vor, wenn vor dem Umsetzen des Schaltsignals zum Schließen des ersten und zweiten Schaltelements das zweite Schaltelement geschlossen ist.

In einer weiteren vorteilhaften Ausführungsform der Erfindung ist das erste und zweite Meldemittel in Serie zwischen der zweiten Kontaktstelle und dem Steueranschluss des ersten und zweiten Schaltelements geschaltet. Sind die beiden Meldemittel beispielsweise als zwangsgeführte Öffner zum zugehörigen Schaltelement ausgebildet und das Schaltsignal zum Schließen der beiden Schaltelemente wird über die in Serie verschalteten zwangsgeführten Öffner geführt, so wird das Schaltsignal zum Schließen der beiden Schaltelemente nicht zu dem Steueranschluss der Schaltelementen geführt, sofern eines der Schaltelement keine ordnungsgemäße Schaltstellung aufweist, da der Öffner des Schaltelements, welches keine ordnungsgemäß erwartete Schaltstellung aufweist, geöffnet ist. Durch diesen geöffneten Öffner wird die Übertragung des Schaltsignals zur Ansteuerung der beiden Schaltelemente unterbrochen.

In einer weiteren vorteilhaften Ausführungsform der Erfindung ist das erste und zweite Schaltmittel jeweils ein zwangsgeführtes Relais.

Vorzugsweise ist das erste und zweite Schaltelement ein Schließer, so dass mittels eines Signals (High Pegel) am Steueranschluss des ersten und zweiten Schaltelements das Schaltelement geschlossen wird. Entfällt das Signal am Steueranschluss (Low Pegel), so nimmt der Schließer vorzugsweise automatisch die geöffnete Stellung ein.

In einer weiteren vorteilhaften Ausführungsform der Erfindung ist das erste Meldemittel ein zwangsgeführter Öffnerkontakt des ersten Schaltelements und das zweite Meldemittel ein zwangsgeführter Öffnerkontakt des zweiten Schaltelements.

In einer weiteren vorteilhaften Ausführungsform der Erfindung ist zur elektrisch leitenden Verbindung zwischen der ersten Kontaktstelle und der zweiten Kontaktstelle das Erweiterungsmodul mit einem Verbindungsmodul koppelbar. Das mit dem Erweiterungsmodul gekoppelte Verbindungsmodul ist diesem zuzuordnen.

In einer weiteren vorteilhaften Ausführungsform der Erfindung behält das Erweiterungsmodul bei Feststellung einer fehlerhaften Schaltstellung des ersten und/oder zweiten Schaltelements eigenständig einen sicheren Zustand bei. Das erste und oder zweite Schaltelement wird folglich nicht durch das Schaltsignal zum Schließen des ersten und/oder zweiten Schaltelements geschlossen.

In einer weiteren vorteilhaften Ausführungsform der Erfindung ist das erste und zweite Schaltelement in Serie zu einem Ausgang des Erweiterungsmoduls geschaltet. Hierfür umfasst jeder Ausgang vorzugsweise zwei Anschlusskontakte. Das erste und zweite Schaltelement ist in Serie zwischen die beiden Anschlusskontakte geschaltet. Wird an einem der beiden Anschlusskontakte eine Steuerspannung angelegt, so wird diese lediglich am anderen Anschlusskontakt ausgegeben, sofern beide Schaltelemente geschlossen sind. Sofern das erste und/oder zweite Schaltelement geöffnet ist, wird die innerhalb des Erweiterungsmoduls geführte elektrisch leitende Verbindung zwischen den beiden Anschlusskontakten unterbrochen. Das an der zweiten Kontaktstelle eingehende Schaltsignal des Basisgerätes dient folglich dem Schließen der ersten und zweiten Schaltelemente, so dass die beiden Anschlusskontakte über die in Serie geschalteten Schaltelemente elektrisch leitend miteinander verbunden sind.

In einer weiteren vorteilhaften Ausführungsform der Erfindung ist das erste und zweite Meldemittel in Serie geschaltet.

In einer weiteren vorteilhaften Ausführungsform der Erfindung umfasst das Sicherheitssystem ein Basismodul mit einer ersten Kontaktstelle und ein Erweiterungsmodul, wobei das Basismodul mit dem Erweiterungsmodul koppelbar ist, so dass im gekoppelten Zustand eine elektrisch leitende Verbindung zwischen der ersten und zweiten Kontaktstelle vorliegt, wobei das Basismodul über die erste Kontaktstelle ein Schaltsignal zum Schließen des ersten und zweiten Schaltelements an das Erweitungsmodul ausgeben kann.

In einer weiteren vorteilhaften Ausführungsform der Erfindung erfolgt eine Kommunikation zwischen dem Basismodul und dem Erweiterungsmodul über die erste und zweite Kontaktstelle ausschließlich mit binären Signalen.

In einer weiteren vorteilhaften Ausführungsform der Erfindung wird das Erweiterungsmodul vollständig von dem Basismodul, vorzugsweise über die erste und zweite Kontaktstelle, mit Energie versorgt.

In einer weiteren vorteilhaften Ausführungsform der Erfindung umfasst ein Erweiterungsmodul mehrere Ausgänge. Die einzelnen Ausgänge werden analog zur obigen Beschreibung einheitlich durch ein Schaltsignal zum Schließen der ersten und zweiten Schaltelemente angesteuert.

In einer weiteren vorteilhaften Ausführungsform der Erfindung ist beim Sicherheitssystem das Basismodul mit mindestens zwei erfindungsgemäßen Erweiterungsmodulen gekoppelt. Hierbei werden vorzugsweise durch Ausgabe eines Schaltsignals zum Schließen der ersten und zweiten Schaltelemente die den Ausgang steuernden Schaltelemente der Erweiterungsmodule einheitlich geschaltet; d.h. über die Ausgänge der Erweiterungsmodule wird einheitlich das gleiche Ausgangssignal ausgegeben.

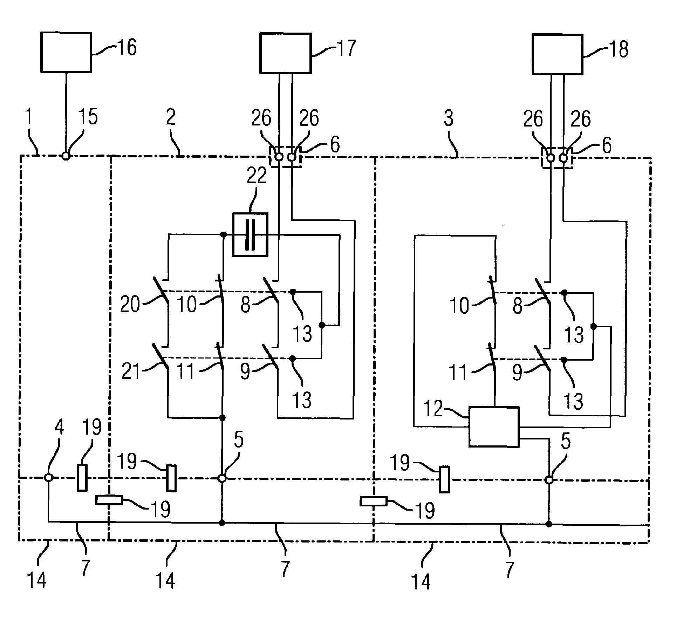

Im Folgenden werden die Erfindung und Ausgestaltungen der Erfindung anhand des in der Figur dargestellten Ausführungsbeispiels näher beschrieben und erläutert.

Die Figur zeigt eine schematische Darstellung eines Sicherheitssystems, welches ein Basismodul 1 und zwei Erweiterungsmodule 2,3 umfasst. Das Basismodul 1 weist eine erste Kontaktstelle 4 auf. Das erste Erweiterungsmodul 2 und das zweite Erweiterungsmodul 3 weisen jeweils eine zweite Kontaktstelle 5 auf. Zur elektrisch leitenden und mechanischen Verbindung der einzelnen Module untereinander weisen die einzelnen Module 1,2,3 jeweils ein Verbindungsmodul 14 auf. Jedem Modul 1,2,3 ist ein separates Verbindungsmodul 14 zugeordnet. Die einzelnen Module 1,2,3 sind mit ihren zugehörigen Verbindungsmodulen mittels Befestigungsmittel 19 mechanisch verbunden (z.B. aufgeschnappt). Neben der mechanischen Verbindung erfolgt ferner eine elektrische Kontaktierung der entsprechenden Kontaktstelle 4,5 der Module 1,2,3 mit einer internen Leitung 7 des zugehörigen Verbindungsmoduls 14. Das Verbindungsmodul 14 des Basismoduls 1 ist mechanisch und elektrisch mit dem Verbindungsmodul 14 des ersten Erweiterungsmoduls 2 gekoppelt, so dass über die internen Leitungen 7 der beiden Verbindungsmodule 14 die erste und zweite Kontaktstelle 4,5 elektrisch leitend miteinander verbunden ist. Das Verbindungsmodul 14 des zweiten Erweiterungsmoduls 3 ist mechanisch und elektrisch mit dem Verbindungsmodul 14 des ersten Erweiterungsmoduls 2 gekoppelt, so dass über die internen Leitungen 7 der Verbindungsmodule 14 die erste und zweite Kontaktstelle 4,5 elektrisch leitend miteinander verbunden ist. Die mechanische Verbindung zwischen den einzelnen Verbindungsmodulen 14 erfolgt ebenso mittels Befestigungsmittel 19. Alternativ zur Verbindung der Kontaktstelle 4 mit den Kontaktstellen 5 mittels der Verbindungsmodule 14 kann ebenso eine Einzelverdrahtung der Kontaktstellen 4 mit den Kontaktstellen 5 erfolgen.

Das Basismodul 1 umfasst ferner einen ersten Eingang 15 an welchen ein Sensor 16 (z.B. Not-Aus-Taster) angeschlossen ist. Mittels des Sensors 16 kann ein Signal an das Basismodul 1 ausgegeben werden.

Das erste und zweite Erweiterungsmodul 2,3 umfasst jeweils einen Ausgang 6, ein erstes Schaltelement 8, ein zweites Schaltelement 9, einen ersten Meldekontakt 10 und einen zweiten Meldekontakt 11. Der erste und zweite Meldekontakt 10,11 ist in diesem Ausführungsbeispiel ein zwangsgeführter Öffner des zugehörigen Schaltelementes 8,9. Das erste Erweiterungsmodul 2 umfasst ferner zwei Schließer 20,21 und eine Anwerfeinrichtung 22. Das zweite Erweiterungsmodul 3 umfasst ferner eine Verarbeitungseinheit 12.

Da ein sicherheitsgerichtetes System vorliegt, muss eine Ausgabe eines High Pegel Ausgangssignals am Ausgang 6 des ersten und zweiten Erweiterungsmoduls 2,3 sicherheitsgerichtet erfolgen. Hierfür erfolgt das Freigeben des High Pegel Ausgangssignals am Ausgang 6 jeweils über die zwei in Serie geschalteten Schaltelemente 8,9. Die Ansteuerung des ersten und zweiten Schaltelements 8,9 erfolgt über den zugehörigen Steueranschluss 13 der Schaltelemente 8,9. Die in Serie geschalteten Schaltelemente 8,9 sind zwischen zwei Anschlusskontakte 26 des Ausgangs 6 angeordnet, so dass im geschlossenen Zustand der ersten und zweiten Schaltelemente 8,9 eine elektrisch leitende Verbindung zwischen den beiden Anschlusskontakten 26 des Ausgangs 6 vorliegt. Die Schaltelemente 8, 9 sind nicht mit der Kontaktstelle 5 verbunden. Sie sind potenzialfrei, d.h. der Anwender kann über den Ausgang 6 eine beliebige Steuerspannung für das Ansteuern der Last 17, 18 anlegen. Das erste und zweite Schaltelement 8,9 ist hierbei jeweils ein Schließer, welcher durch Anlegen eines Schaltsignals (High Pegel) am Steueranschluss 13 die geschlossene Stellung einnimmt und durch Entfernen des Schaltsignals am Steueranschluss 13 im ordnungsgemäßen Betrieb automatisch die offene Stellung einnimmt. Im Fehlerfall kann es jedoch vorkommen, dass das Schaltelement 8,9 durch Wegschalten des High Pegels am Steueranschluss 13 nicht automatisch die offene Stellung einnimmt. Dies kann beispielsweise durch ein Verschweißen des Schaltelements 8,9 verursacht werden. In einem derartigen Fall liegt keine erwartete ordnungsgemäße Schaltstellung am Schaltelement 8,9 und am zugehörigen Meldekontakt 10,11 vor.

Das Anlegen des Schaltsignals (High Pegel) am Steueranschluss 13 des ersten und zweiten Schaltelements 8,9 entspricht dem Freigeben des Freigabekreises, da durch das Schließen des ersten und zweiten Schaltelements 8,9 die über die beiden Anschlusskontakte 26 des Ausgangs 6 geführte Steuerspannung gesteuert werden kann. Vor dem Freigeben des Freigabekreises muss jedoch sichergestellt werden, dass das erste und zweite Schaltelement 8,9 einen erwarteten ordnungsgemäßen Schaltzustand aufweist. Da vor dem Freigeben des Freigabekreises die Schaltelemente 8,9 noch nicht angesteuert sind, müssten die Schaltelemente 8,9 jeweils die offene Stellung aufweisen; d.h. das Schaltelement 8,9 unterbricht jeweils die über das Schaltelement 8,9 geführte elektrisch leitende Verbindung.

Zur Feststellung der Schaltstellung der ersten und zweiten Schaltelement 8,9 ist den Schaltelementen 8,9 jeweils ein Meldemittel 10,11 zugeordnet. Mittels des ersten Meldemittels 10 kann die Schaltstellung des ersten Schaltelements 8 charakterisiert und somit bestimmt werden. Mittels des zweiten Meldemittels 11 kann die Schaltstellung des zweiten Schaltelements 9 charakterisiert und somit bestimmt werden. Durch eine Analyse der vorliegenden Schaltstellung der ersten und zweiten Meldemittel 10,11 kann folglich die vorliegende Schaltstellung der ersten und zweiten Schaltelemente 8,9 festgestellt werden, so dass bestimmt werden kann, ob eine erwartete ordnungsgemäße Schaltstellung des ersten und zweiten Schaltelements 8,9 vorliegt. Vor dem Schließen der über den Ausgang 6 geführten und gesteuerten Steuerspannung kann das Erweiterungsmodul 2,3 autark mittels der Meldemittel 10,11 kontrollieren, ob eine ordnungsgemäße Schaltstellung der ersten und zweiten Schaltelement 8,9 vorliegt. Der Befehl zum Freigeben der Steuerspannung am Ausgang 6 des Erweiterungsmoduls 2,3 wird durch Ausgabe eines Schaltsignals zum Schließen des ersten und zweiten Schaltelements 8,9 durch das Basismodul 1 herbeigeführt. Hierfür wird durch das Basismodul 1 an der ersten Kontaktstelle 4 ein Spannungshub von 0 Volt auf 3 bis 50 Volt, vorzugsweise 5 oder 24 V, erzeugt.

Zur Kontrolle des ordnungsgemäßen Schaltzustandes der Schaltelement 8,9 sind bei dem ersten Erweiterungsmodul 2 die in Serie geschalteten Meldemittel 10,11 zwischen dem Steueranschluss 13 der ersten und zweiten Schaltelemente 8,9 und der zweiten Kontaktstelle 5 geschaltet. Liegt eine erwartete ordnungsgemäße Schaltstellung am ersten und zweiten Schaltelement 8,9 vor, so wird ein vom Basismodul 1 gesandtes an der zweiten Kontaktstelle anliegendes Schaltsignal zum Schließen der ersten und zweiten Schaltelemente 8,9 über die geschlossenen ersten und zweiten Meldemittel 10,11 geführt, so dass ein High Pegel Signal als Schaltsignal am Steueranschluss 13 der ersten und zweiten Schaltelemente 8,9 anliegt. Liegt ein High Pegel Signal am Steueranschluss 13 an, so schließen die ersten und zweiten Schaltelemente 8,9, so dass eine elektrisch leitende Verbindung zwischen den beiden Anschlusskontakten 26 des Ausgangs 6 vorliegt. Es liegt ein geschlossener Stromkreis hinsichtlich der zu steuernden Steuerspannung vor. Ein mit dem Ausgang 6 verbundener Verbraucher 17 kann somit über die Schaltelemente 8,9 des Erweiterungsmoduls 2 angesteuert werden. Damit die Ansteuerung des Steueranschlusses 13 nicht unterbrochen wird umfasst das erste Erweiterungsmodul ferner den ersten und zweiten Schließer 20,21 sowie die Anwerfeinrichtung 22. Die Schließer 20, 21 schließen mit erfolgter Ansteuerung durch den Steueranschluss 13. Die Anwerfeinrichtung 22 sorgt dafür, dass während des Umschaltvorgangs des ersten und zweiten Schaltelements 8,9 und somit des Meldemittels 10,11 und des Schließers 20,21 die Energieversorgung für den Steueranschluss 13 nicht abbricht. Hierfür umfasst die Anwerfeinrichtung 22 einen Kondensator und eine Schwellwertschaltung. Liegt ein Schaltsignal zum Schließen der Schaltelemente 8,9 an der zweiten Kontaktstelle 5 vor, so wird über die Meldemittel 10,11 der Kondensator (Anwerfkondensator) aufgeladen sowie die interne Elektronik (Schwellwertschaltung) mit Spannung versorgt. Mittels der Schwellwertschaltung (z.B. Komparatorschaltung) wird ein Spannungspegel am Kondensator festgelegt. Ist die eingestellte Schaltschwelle erreicht, werden die beiden Steueranschlüsse 13 an Spannung geschaltet. Die im Kondensator gespeicherte Energie muss ausreichen, um die internen redundanten Schaltelemente 8,9 in Wirkstellung zu bringen. D.h. nach dem Öffnen der in Serie geschalteten Meldemittel 10,11 versorgt die im Kondensator gespeicherte Energie die gesamte Schaltung solange, bis die Schließer 20, 21 geschlossen sind und sich das erste Erweiterungsmodul 2 in Selbsthaltung befindet. Würde am ersten oder zweiten Schaltelemente 8,9 keine ordnungsgemäße Schaltstellung vorliegen, so wäre das zugehörige Meldemittel 10,11 des defekten Schaltelements 8,9 geöffnet, so dass das an der zweiten Kontaktstelle 5 anliegende Schaltsignal zum Schließen der ersten und zweiten Schaltelemente 8,9 nicht zum Steueranschluss 13 der erste und zweite Schaltelemente 8,9 geführt wird. Vor einem Freigeben eines Schaltsignals für den Steueranschluss 13 der Schaltelemente 8,9 wird durch die beiden Meldemittel 10,11 sichergestellt, dass eine ordnungsgemäße Funktion der Schaltelemente 8,9 zum Zeitpunkt des Umsetzten des Schaltsignals um Schließen der Schaltelemente 8,9 gegeben ist. Das Erweiterungsmodul 2 wertet somit den Zustand des Rückführkreises sicherheitsgerichtet und eigenständig aus.

Bei dem zweiten Erweiterungsmodul 3 erfolgt die Auswertung der ordnungsgemäßen Funktion der ersten und zweiten Schaltelemente 8,9 und die Freigabe der beiden Schaltelemente 8,9 mittels der Verarbeitungseinheit 12. Die Schaltstellung der ersten und zweiten Schaltelemente 8,9 wird ebenso mittels der ersten und zweiten Meldemittel 10,11 charakterisiert. Das Freigeben des Schaltsignals erfolgt jedoch nicht unmittelbar durch das erste und zweite Meldemittel 10,11, sondern durch die Verarbeitungseinheit 12. Die Verarbeitungseinheit 12 kann über die ersten und zweiten Meldemittel 10,11 feststellen, ob eine erwartete ordnungsgemäße Schaltstellung an den ersten und zweiten Schaltelemente 8,9 vorliegt. Ferner kann die Verarbeitungseinheit 12 den Steueranschluss 13 der ersten und zweiten Schaltelemente 8,9 ansteuern. Liegt an der zweiten Kontaktstelle 5 von dem Erweiterungsmodul 3 ein Schaltsignal zum Schließen des ersten und zweiten Schaltelements 8,9 an, so wird dies von der Verarbeitungseinheit 12 erfasst. Durch die Verarbeitungseinheit 12 wird hierauf mittels der Meldemittel 10,11 überprüft ob eine erwartete ordnungsgemäße Schaltstellung vorliegt. Wird eine fehlerhafte Schaltstellung (das erste oder zweite Schaltelement 8,9 ist geschlossen / das erste oder zweite Meldemittel ist geöffnet) festgestellt, so wird kein Schaltsignal an den Steueranschluss 13 der Schaltelemente 8,9 durch die Verarbeitungseinheit 12 ausgegeben. Wird hingegen festgestellt, dass eine erwartete ordnungsgemäße Schaltstellung vorliegt, so wird mittels der Verarbeitungseinheit 12 ein Schaltsignal an den Steueranschluss 13 ausgegeben, so dass die ersten und zweiten Schaltelemente 8,9 schließen und am Ausgang 6 des zweiten Erweiterungsmoduls 3 ein Ausgangssignal freigegeben wird, mittels welchen ein Verbraucher 18 (z.B. ein Ventil) gesteuert werden kann.

Das erste und zweite Schaltelement 8,9 ist in Serie zwischen den beiden Anschlusskontakten 26 des Ausgangs 6 geschaltet. An einem der beiden Anschlusskontakte 26 liegt eine Steuerspannung an, welche durch Schließen der ersten und zweiten Schaltelement 8,9 an dem andern Anschlusskontakt 26 freigegeben/ausgegeben wird. Sind die beiden Schaltelemente 8,9 geschlossen und an einem Anschlusskontakt 26 des Ausgangs liegt eine Steuerspannung an, so wird am zugehörigen anderen Anschlusskontakt 26 des Ausgangs 6 ein Signal (High Signal) ausgegeben.

Das erste und zweite Erweiterungsmodul 2,3 ist derart ausgebildet, dass es bei Vorliegen eines Schaltsignals für das erste und zweite Schaltelement 8,9 von dem Basismodul 1 eigenständig feststellen kann, ob eine erwartete ordnungsgemäße Schaltstellung der ersten und zweiten Schaltelemente 8,9 vorliegt. Liegt keine ordnungsgemäße Schaltstellung vor, so wird durch das Erweiterungsmodul 2,3 autark verhindert, dass am Ausgang 6 des entsprechenden Erweiterungsmoduls 2,3 ein High Signal ausgegeben wird. Ein vom Basismodul 1 empfangenes Schaltsignal zum Schließen des ersten und zweiten Schaltelements 8,9 wird somit nur bei Vorliegen einer erwarteten ordnungsgemäßen Schaltstellung des ersten und zweiten Schaltelements 8,9 durch das Erweiterungsmodul 2,3 umgesetzt.

Ein Basismodul 1 des Sicherheitssystems kann mit mehreren Erweiterungsmodulen 2,3 gekoppelt werden. Durch eine Ausgabe eines Schaltsignals zum Schließen der ersten und zweiten Schaltelemente 8,9 durch das Basismodul 1 erfolgt bei allen mit dem Basismodul 1 gekoppelten Erweiterungsmodulen 2,3 eine eigenständige Überwachung der anzusteuernden Schaltelemente 8,9, so dass sofern bei einem Erweiterungsmodul 2,3 ein Defekt vorliegt lediglich bei diesem Erweiterungsmodul 2,3 das Schalten der Schaltelemente 8,9 unterbunden wird.

Sofern ein Erweiterungsmodul 2,3 mehrere Ausgänge aufweist, so erfolgt die Ansteuerung und Überwachung der Schaltelemente 8,9 der einzelnen Ausgänge 6 in analoger Weise. Weist das zweite Erweiterungsmodul 3 mehrere Ausgänge auf, so kann mittels einer Verarbeitungseinheit 12, das Registrieren des Schaltsignals des Basismoduls 1, die Überwachung der Meldemittel 10,11 sowie die Ansteuerung der Steueranschlüsse 13 aller Anschlüsse 6 des Erweiterungsmoduls 3 erfolgen. Liegt ein Fehler hinsichtlich der Schaltelemente 8,9 eines Ausgangs 6 vor, so wird bei diesem Ausgang 6, ein Umsetzten des Schaltsignals des Basismoduls 1 verhindert.

Die Ausgänge 6 des Sicherheitssystems werden vorzugsweise einheitlich von dem Basismodul 1 angesteuert; d.h. durch Ausgabe eines Signals zum Schließen des ersten und zweiten Schaltelements 8,9 soll innerhalb des Sicherheitssystems an allen Ausgängen 6 ein geschlossener Kreis zwischen den zwei Anschlusskontakten 26 des jeweiligen Ausgangs 6 vorliegen.

Werden mehrere Erweiterungsmodule 2,3 mit dem Basisgerät 1 verbunden, so wird hierfür jeweils die zweite Kontaktstelle 5 des Erweiterungsmoduls 2,3 elektrisch leitend mit der ersten Kontaktstelle 4 des Basismoduls 1 verbunden.

## Patentansprüche

1. Sicherheitssystem mit einem Basismodul (1) mit einer ersten Kontaktstelle (4) und einem Erweiterungsmodul (2,3), wobei das Erweiterungsmodul (2,3) eine zweite Kontaktstelle (5) umfasst, welche mit einer ersten Kontaktstelle (4) des Basismoduls (1) des Sicherheitssystems koppelbar ist, so dass im gekoppelten Zustand eine elektrisch leitende Verbindung zwischen der ersten und zweiten Kontaktstelle (4,5) vorliegt, wobei das Erweiterungsmodul (2,3) ein erstes und zweites Schaltelement (8,9), ein erstes Meldemittel (10), welches die Schaltstellung des ersten Schaltelements (8) charakterisiert, und ein zweites Meldemittel (11), welches die Schaltstellung des zweiten Schaltelements (9) charakterisiert, umfasst, **dadurch gekennzeichnet, dass** das erste und zweite Meldemittel (10,11) in Serie geschaltet ist und das Erweiterungsmodul (2,3) mittels des ersten und zweiten Meldemittels (10,11) eigenständig feststellen kann, ob eine erwartete ordnungsgemäße Schaltstellung des ersten und zweiten Schaltelements (8,9) vorliegt, wobei das Basismodul (1) über die erste Kontaktstelle (4) ein Schaltsignal zum Schließen des ersten und zweiten Schaltelements (8,9) an das Erweiterungsmodul (2,3) ausgeben kann, wobei das Erweiterungsmodul (2,3) derart ausgebildet ist, dass ein vom Basismodul (1) empfangenes Schaltsignal zum Schließen des ersten und zweiten Schaltelements (8,9) nur bei Vorliegen einer erwarteten ordnungsgemäßen Schaltstellung des ersten und zweiten Schaltelements (8,9) umgesetzt wird, wobei das Erweiterungsmodul (3) eine Verarbeitungseinheit (12) umfasst, wobei die Verarbeitungseinheit (12) derart ausgebildet ist, dass sie mittels des ersten und zweiten Meldemittels (10,11) die vorliegende Schaltstellung des ersten und zweiten Schaltelements (8,9) erfasst, ein vom Basismodul (1) gesandtes Schaltsignal zum Schließen des ersten und zweiten Schaltelements (8,9) über die zweite Kontaktstelle (5) empfängt und ein Schaltsignal zum Schließen des ersten und zweiten Schaltelements (8,9) an das erste und zweite Schaltelement (8,9) ausgibt.

2. Sicherheitssystem nach Anspruch 1, wobei die Verarbeitungseinheit (12) derart ausgebildet ist, dass sie ein Schaltsignal zum Schließen des ersten und zweiten Schaltelements (8,9) nur bei Vorliegen einer erwarteten ordnungsgemäßen Schaltstellung des ersten und zweiten Schaltelements (8,9) an das erste und zweite Schaltelement (8,9) ausgibt.

3. Sicherheitssystem nach einem der vorhergehenden Ansprüche, wobei das erste und zweite Schaltmittel (8,9) jeweils ein zwangsgeführtes Relais ist.

4. Sicherheitssystem nach einem der vorhergehenden Ansprüche, wobei das erste Meldemittel (10) ein zwangsgeführter Öffnerkontakt des ersten Schaltelements (8) und das zweite Meldemittel (11) ein zwangsgeführter Öffnerkontakt des zweiten Schaltelements (9) ist.

5. Sicherheitssystem nach einem der vorhergehenden Ansprüche, wobei zur elektrisch leitenden Verbindung zwischen der ersten Kontaktstelle (4) und der zweiten Kontaktstelle (5) das Erweiterungsmodul (2,3) mit einem Verbindungsmodul (14) koppelbar ist.

6. Sicherheitssystem nach einem der vorhergehenden Ansprüche, wobei das Erweiterungsmodul (2,3) bei Feststellung einer fehlerhaften Schaltstellung des ersten und/oder zweiten Schaltelements (8,9) eigenständig einen sicheren Zustand beibehält.

7. Sicherheitssystem nach einem der vorhergehenden Ansprüche, wobei das erste und zweite Schaltelement (8,9) in Serie zu einem Ausgang (6) des Erweiterungsmoduls (2,3) geschaltet ist, wobei der Ausgang (6) dem Schalten einer Steuerspannung dient.

8. Sicherheitssystem nach einem der vorhergehenden Ansprüche, wobei eine Kommunikation zwischen dem Basismodul (1) und dem Erweiterungsmodul (2,3) über die erste und zweite Kontaktstelle (4,5) ausschließlich mit binären Signalen erfolgt.

9. Sicherheitssystem nach einem der vorhergehenden Ansprüche, wobei das Basismodul (1) ein Verbindungsmodul (14) und das Erweiterungsmodul (2,3) ein Verbindungsmodul (14) umfasst, wobei das Verbindungsmodul (14) des Basismoduls (1) mechanisch und elektrisch mit dem Verbindungsmodul (14) des Erweiterungsmoduls (2,3) gekoppelt ist, so dass über interne Leitungen (7) der beiden Verbindungsmodule (14) die erste und zweite Kontaktstelle (4,5) elektrisch leitend miteinander verbunden ist.

10. Sicherheitssystem nach einem der vorhergehenden Ansprüche, wobei das Basismodul (1) mit mindestens zwei Erweiterungsmodulen (2,3) gekoppelt ist.

11. Sicherheitssystem nach Anspruch 10, wobei durch die Ausgabe des Schaltsignals zum Schließen der ersten und zweiten Schaltelemente (8,9) die den Ausgang (6) steuernden Schaltelemente (8,9) der Erweiterungsmodule (2,3) einheitlich geschaltet werden.

## Claims

1. Security system having a base module (1) with a first contact point (4) and an expansion module (2, 3), wherein the expansion module (2, 3) comprises a second contact point (5), which can be coupled with a first contact point (4) of the base module (1) of the security system so that in the coupled state an electrically conducting connection exists between the first and second contact point (4, 5), wherein the expansion module (2, 3) comprises a first and second switching element (8, 9), a first indication means (10), which characterises the switch position of the first switching element (8) and a second indication means (11), which characterises the switch position of the second switching element (9),
**characterised in that**
the first and second indication means (10, 11) are connected in series and the expansion module (2, 3) can independently determine by means of the first and second indication means (10, 11) whether an expected, correct switch position of the first and second switching element (8, 9) exists, wherein by way of the first contact point (4) the base module (1) can output a switching signal to the expansion module (2, 3) in order to close the first and second switching element (8, 9), wherein the expansion module (2, 3) is embodied such that a switching signal received from the base module (1) for closing the first and second switching element (8, 9) is only implemented in the presence of an expected correct switch position of the first and second switching element (8, 9), wherein the expansion module (3) comprises a processing unit (12), wherein the processing unit (12) is embodied such that it acquires the current switch position of the first and second switching element (8, 9) by means of the first and second indication means (10, 11), it receives, by way of the second contact point (5), a switching signal sent from the base module (1) for closing the first and second switching element (8, 9) and outputs a switching signal to the first and second switching element (8, 9) in order to close the first and second switching element (8, 9).

2. Security system according to claim 1, wherein the processing unit (12) is embodied such that it only outputs a switching signal to the first and second switching element (8, 9) in order to close the first and second switching element (8, 9) in the presence of an expected correct switch position of the first and second switching element (8, 9).

3. Security system according to one of the preceding claims, wherein the first and second switching means (8, 9) is a positively driven relay in each case.

4. Security system according to one of the preceding claims, wherein the first indication means (10) is a positively driven break contact of the first switching element (8) and the second indication means (11) is a positively driven break contact of the second switching element (9).

5. Security system according to one of the preceding claims, wherein the expansion module (2, 3) can be coupled with a connecting module (14) for the electrically conducting connection between the first contact point (4) and the second contact point (5).

6. Security system according to one of the preceding claims, wherein the expansion module (2, 3) independently retains a secure state when determining a faulty switch position of the first and/or second switching element (8, 9).

7. Security system according to one of the preceding claims, wherein the first and second switching element (8, 9) are connected in series with an output (6) of the expansion module (2, 3), wherein the output (6) serves to switch a control voltage.

8. Security system according to one of the preceding claims, wherein a communication between the base module (1) and the expansion module (2, 3) takes place exclusively with binary signals by way of the first and second contact point (4, 5).

9. Security system according to one of the preceding claims, wherein the base module (1) comprises a connecting module (14) and the expansion module (2, 3) comprises a connecting module (14), wherein the connecting module (14) of the base module (1) is mechanically and electrically coupled with the connecting module (14) of the expansion module (2, 3) so that the first and second contact point (4, 5) are connected to one another in an electrically conducting manner by way of internal lines (7) of the two connecting modules (14).

10. Security system according to one of the preceding claims, wherein the base module (1) is coupled with at least two expansion modules (2, 3).

11. Security system according to claim 10, wherein by outputting the switching signal in order to close the first and second switching elements (8, 9), the switching elements (8, 9) of the expansion modules (2, 3) controlling the output (6) are uniformly switched.

## Revendications

1. Système de sécurité comprenant un module ( 1 ) de base ayant un premier point ( 4 ) de contact et un module ( 2, 3 ) d'extension, le module ( 2, 3 ) d'extension comprenant un deuxième point ( 5 ) de contact, qui peut être couplé à un premier point ( 4 ) de contact du module ( 1 ) de base du système de sécurité de manière à avoir à l'état couplé une liaison conductrice de l'électricité entre le premier et le deuxième points ( 4, 5 ) de contact, le module ( 2, 3 ) d'extension comprenant un premier et un deuxième éléments ( 8, 9 ) de commutation, un premier moyen ( 10 ) de signalisation qui caractérise la position de commutation du premier élément ( 8 ) de commutation et un deuxième moyen ( 11 ) de signalisation qui caractérise la position de commutation du deuxième élément ( 9 ) de commutation,
**caractérisé en ce que**
le premier et le deuxième moyens ( 10, 11 ) de signalisation sont montés en série et le module ( 2, 3 ) d'extension peut constater de manière indépendante, au moyen du premier et du deuxième moyens ( 10, 11 ) de signalisation, s'il y a une bonne position de commutation escomptée du premier et du deuxième éléments ( 8, 9 ) de commutation, le module ( 1 ) de base pouvant envoyer au module ( 2, 3 ) d'extension par l'intermédiaire du premier point ( 4 ) de contact un signal de commutation pour fermer le premier et le deuxième éléments ( 8, 9 ) de commutation, le module ( 2, 3 ) d'extension étant constitué de manière à ce qu'un signal de commutation reçu par le module ( 1 ) de base ne soit mis en oeuvre pour fermer le premier et le deuxième éléments ( 8, 9 ) de commutation qu'en présence d'une bonne position de commutation escomptée du premier et du deuxième éléments ( 8, 9 ) de commutation, le module ( 3 ) d'extension comprenant une unité ( 12 ) de traitement et l'unité ( 12 ) de traitement étant constituée de manière à détecter, à l'aide du premier et du deuxième moyens ( 10, 11 ) de signalisation, la position de commutation présente du premier et du deuxième éléments ( 8, 9 ) de commutation, un signal de commutation, envoyé par le module ( 1 ) de base, pour fermer le premier et le deuxième éléments ( 8, 9 ) de commutation, étant reçu par l'intermédiaire du deuxième point ( 5 ) de contact et un signal de commutation pour fermer le premier et le deuxième éléments ( 8, 9 ) de commutation étant envoyé au premier et au deuxième éléments ( 8, 9 ) de commutation.

2. Système de sécurité suivant la revendication 1, dans lequel l'unité ( 12 ) de traitement est constituée de manière à envoyer au premier et au deuxième éléments ( 8, 9 ) de commutation un signal de commutation pour fermer le premier et le deuxième éléments ( 8, 9 ) de commutation, seulement en présence d'une bonne position de commutation escomptée du premier et du deuxième éléments ( 8, 9 ) de commutation.

3. Système de sécurité suivant l'une des revendications précédentes, dans lequel le premier et le deuxième moyens ( 8, 9 ) de signalisation sont respectivement un relais à guidage forcé.

4. Système de sécurité suivant l'une des revendications précédentes, dans lequel le premier moyen ( 10 ) de signalisation est un contact de rupteur à guidage forcé du premier élément ( 8 ) de commutation et le deuxième moyen ( 11 ) de signalisation est un contact de rupteur à guidage forcé du deuxième élément ( 9 ) de commutation.

5. Système de sécurité suivant l'une des revendications précédentes, dans lequel, pour la liaison conductrice de l'électricité entre le premier point ( 4 ) de contact et le deuxième point ( 5 ) de contact, le module ( 2, 3 ) d'extension peut être couplé à un module ( 14 ) de liaison.

6. Système de sécurité suivant l'une des revendications précédentes, dans lequel le module ( 2, 3 ) d'extension conserve, à la constatation d'une position de commutation défectueuse du premier et/ou deuxième éléments ( 8, 9 ) de commutation, de manière indépendante un état sécurisé.

7. Système de sécurité suivant l'une des revendications précédentes, dans lequel le premier et le deuxième éléments ( 8, 9 ) de commutation sont montés en série avec une sortie ( 6 ) du module ( 2, 3 ) d'extension, la sortie ( 6 ) servant à l'application d'une tension de commande.

8. Système de sécurité suivant l'une des revendications précédentes, dans lequel une communication a lieu entre le module ( 1 ) de base et le module ( 2, 3 ) d'extension par l'intermédiaire du premier et du deuxième points ( 4, 5 ) de contact exclusivement par des signaux binaires.

9. Système de sécurité suivant l'une des revendications précédentes, dans lequel le module ( 1 ) de base comprend un module ( 14 ) de liaison et le module ( 2, 3 ) d'extension un module ( 14 ) de liaison, le module ( 14 ) de liaison du module ( 1 ) de base étant couplé mécaniquement et électriquement au module ( 14 ) de liaison du module ( 2, 3 ) d'extension, de manière à ce que, par des lignes ( 7 ) internes des deux modules ( 14 ) de liaison, le premier et le deuxième points ( 4, 5 ) de contact soient reliés l'un à l'autre d'une manière conductrice de l'électricité.

10. Système de sécurité suivant l'une des revendications précédentes, dans lequel le module ( 1 ) de base est couplé à au moins deux modules ( 2, 3 ) d'extension.

11. Système de sécurité suivant la revendication 10, dans lequel, par l'envoi du signal de commutation pour la fermeture du premier et du deuxième éléments ( 8, 9 ) de commutation, les éléments ( 8, 9 ) de commutation, commandant la sortie ( 6 ) des modules ( 2, 3 ) d'extension sont montés d'une manière unitaire.
